Europäisches Patentamt

European Patent Office

Office européen des brevets

(19)

(11) Veröffentlichungsnummer : **0 111 593**
**B1**

(12)  # EUROPÄISCHE PATENTSCHRIFT

(45) Veröffentlichungstag der Patentschrift :
03.12.86

(21) Anmeldenummer : 82111981.5

(22) Anmeldetag : 23.12.82

(51) Int. Cl.⁴ : **A 21 C 15/00**, A 21 D 15/00,
A 23 G 9/28

(54) **Verfahren und Vorrichtung zum Konditionieren von Waffelblättern.**

(43) Veröffentlichungstag der Anmeldung :
27.06.84 Patentblatt 84/26

(45) Bekanntmachung des Hinweises auf die Patenterteilung : 03.12.86 Patentblatt 86/49

(84) Benannte Vertragsstaaten :
AT DE GB

(56) Entgegenhaltungen :
CH-A- 155 759
DE-A- 2 205 987
DE-A- 3 024 602
DE-B- 1 090 603

(73) Patentinhaber : **Hebenstreit GmbH**
**Hessenring 16**
**D-6082 Mörfelden (DE)**

(72) Erfinder : **Börner, Erich**
**Martin-Luther-Strasse 15**
**D-6092 Kelsterbach (DE)**

(74) Vertreter : **Katscher, Helmut, Dipl.-Ing.**
**Bismarckstrasse 29**
**D-6100 Darmstadt (DE)**

## Beschreibung

Die Erfindung betrifft ein Verfahren zum Konditionieren von Waffelblättern mittels feuchter Luft sowie eine Vorrichtung zur Druchführung des Verfahrens.

Waffelblätter nehmen nach der Herstellung aus der Umgebungsluft Feuchtigkeit auf, wobei sie ihre Rösche verlieren und sich um 1 bis 2 % ausdehnen. Wenn die Waffelblätter mit einem Überzug versehen werden, beispielsweise einem Schokoladenüberzug, der nicht völlig luftdicht ist, so dehnt sich das Waffelblatt bzw. die aus mehreren Waffelblättern zusammengesetzte Waffel durch die Feuchtigkeitsaufnahme aus der Umgebungsluft allmählich aus und sprengt den Überzug. Da dieser Vorgang noch nach etwa einem Monat erfolgen kann, wenn die Waffel bereits den Herstellungsbetrieb verlassen hat, kommt es zu Reklamationen, denn der Kunde glaubt, daß es sich um alte, überlagerte Waffeln handelt. Um diese Schwierigkeiten zu vermeiden, werden die Waffelblätter vor dem Überziehen mit feuchter Luft behandelt, um den Feuchtigkeitsgehalt des Waffelblatts auf einen Wert anzuheben, bei dem das Ausdehnen des Waffelblatts im wesentlichen abgeschlossen ist, die Rösche aber noch nicht wesentlich beeinträchtigt wurde. Dieser Vorgang wird als Konditionieren bezeichnet. Nachdem das Waffelblatt nach dem Backen abgekühlt ist, hat es einen Feuchtigkeitsgehalt von etwa 1 %. Bei einer üblichen relativen Luftfeuchtigkeit der Umgebungsluft von 50 bis 60 % stellt sich ein Feuchtigkeitsgleichgewicht ein, wenn das Waffelblatt etwa 3 bis 4 % Feuchte hat. Man ist deshalb bestrebt, diesen Feuchtigkeitsgehalt des Waffelblatts beim Konditionieren zu erreichen.

Bekannt ist es, Waffelblätter in klimatisierten Räumen mit hoher Luftfeuchtigkeit gestapelt abzulagern. Die Feuchtigkeit muß hierbei vom Rand der Waffelblätter nach innen bzw. durch die einzelnen Waffelblätter des Stapels hindurch diffundieren. Da dieser Feuchtigkeitstransport nur sehr langsam vor sich geht, sind lange Lagerungszeiten von etwa 36 Stunden in den klimatisierten Räumen erforderlich. Außerdem besteht die Gefahr, daß die einzelnen Waffelblätter eines Stapels ungleichmäßig befeuchtet werden.

Bei einem anderen bekannten Konditionierverfahren wird Sattdampf in Gebäck, wie Brötchen, Semmel, usw., mittels mehrerer nadelartigen Düsen eingeführt (DE-A-2205987). Bei einem anderen bekannten Konditionierverfahren werden die Waffelblätter nacheinander einzeln von einem Förderer durch eine Feuchtluftkammer transportiert, die als Konditionierkanal oder Konditionierturm ausgeführt ist. Die einzelnen Waffelblätter werden dabei mit feuchter Luft umspült und können die Feuchtigkeit über ihre gesamte Oberfläche aufnehmen. Der Transport der Feuchtigkeit in das Innere des Waffelblatts erfolgt auch hierbei durch Diffusion. Deshalb ist es erforderlich, die Waffelblätter etwa 10 Minuten mit der feuchten Luft zu behandeln. In Abhängigkeit von dieser erforderlichen Behandlungszeit und der Laufgeschwindigkeit des Förderers, die im wesentlichen durch die Herstellungsgeschwindigkeit bestimmt ist, ergeben sich verhältnismäßig große Abmessungen der Konditioniertürme oder Konditionierkanäle, so daß der Platzbedarf derartiger Konditionieranlagen sehr groß ist. Außerdem ist die Feuchtigkeitsaufnahme von der Aufnahmebereitschaft (Affinität) des Waffelblatts abhängig, vor allem von der Oberflächenbeschaffenheit. Die Feuchtigkeitsaufnahme kann zwar durch eine Erhöhung der Lufttemperatur gesteigert werden, jedoch führt diese Maßnahme zu einem stärkeren Wegdampfen der Feuchtigkeit beim nachfolgenden Abkühlen der Waffelblätter.

Aufgabe der Erfindung ist es daher, ein Verfahren zu schaffen, mit dem eine rasche, intensive und gleichmäßige Befeuchtung der Waffelblätter ermöglicht wird, ohne daß hierzu eine Anlage mit großem Raumbedarf benötigt wird.

Diese Aufgabe wird erfindungsgemäß dadurch gelöst, daß die feuchte Luft durch die einzelnen Waffelblätter hindurchgesaugt wird. Unabhängig von der Aufnahmebereitschaft der Waffelblätter und deren Oberflächenbeschaffenheit wird die Feuchtigkeit in einem sehr rasch ablaufenden Vorgang bis in das Innere der Waffelblätter transportiert, so daß zur Feuchtigkeitsaufnahme nicht nur die äußere Oberfläche, sondern die gesamte innere Porenoberfläche zur Verfügung steht. Das einzelne Waffelblatt nimmt in sehr kurzer Zeit, beispielsweise innerhalb von 30 sec, die gewünschte Feuchtigkeitsmenge auf. Bei einem Durchlaufverfahren ist der hierfür erforderliche Raumbedarf daher sehr gering.

Zweckmäßigerweise werden die Waffelblätter kontinuierlich über eine luftdurchlässige Fläche bewegt, unter der ein Unterdruck erzeugt wird, wobei die feuchte Luft an der Oberseite der Waffelblätter zugeführt wird. Der Befeuchtung erfolgt dabei kontinuierlich im Durchlaufverfahren, so daß sich dieses Konditionierverfahren besonders günstig an ein kontinuierliches Herstellungsverfahren anschliessen läßt.

Eine Vorrichtung zur vorteilhaften Durchführung des Verfahrens mit einem die einzelnen Waffelblätter aufnehmenden Förderer, der durch eine mit feuchter Luft beaufschlagte Feuchtluftkammer läuft, ist dadurch gekennzeichnet, daß der Förderer ein luftdurchlässiger Bandförderer ist, der auf einem Lochboden durch die Feuchtluftkammer läuft, und daß unter dem Lochboden eine mit einem Sauggebläse verbundene Unterdruckkammer angeordnet ist.

Die Zuführung der feuchten Luft erfolgt dabei im wesentlichen ohne Überdruck, so daß keine besonderen Maßnahmen zur Abdichtung der Feuchtluftkammer erforderlich sind. Deshalb können die empfindlichen Waffelblätter ohne mechanische Berührung mit einer Abdichteinrichtung in die Feuchtlufkammer eingeführt werden.

Es ist zwar bekannt (DE-A-30 24 602), Waffelblätter auf einem luftdurchlässigen Förderer über eine Unterdruckkamer zu führen ; die bekannte Maßnahme dient aber nur dazu, die Waffelblätter an dem Förderer festzuhalten ; die Luft wird nicht durch die Waffelblätter hindurchgesaugt und es erfolgt kein Konditionieren.

Der mechanische Aufwand ist bei der erfindungsgemäßen Vorrichtung verhältnismäßig gering. Da der Konditioniervorgang bereits nach einer kurzen Druchlaufstrecke abgeschlossen ist, sind die notwendigen Abmessungen der Konditioniervorrichtung sehr gering.

Als besonders vorteilhaft hat es sich erwiesen, die aus der Unterdruckkammer abgesaugte Luft über eine Heizeinrichtung und eine Befeuchtungseinrichtung zu leiten und im Kreislauf der Feuchtluftkammer wieder zuzuführen.

In Weiterbildung des Erfindungsgedankens ist vorgesehen, daß die Luftdurchlässigkeit des Lochbodens mit dem aufliegenden Bandförderer in der Größenordnung der Luftdurchlässigkeit der zubehandelnden Waffelblätter liegt. Dadurch wird erreicht, daß auch bei einer nicht vollständigen Abdeckung des Bandförderers durch Waffelblätter die angesaugte Luft nicht überwiegend durch die unbedeckten Bereiche des Bandförderers strömt, sondern weiterhin zu einem wesentlichen Teil durch die Waffelblätter gesaugt wird.

Wegen des einfachen Aufbaus der erfindungsgemäßen Konditioniereinrichtung und insbesondere wegen der kurzen Durchlauflänge können ohne Schwierigkeiten mehrere Konditionierabschnitte hintereinander vorgesehen werden, beispielsweise zwei Feuchtluftkammern, zwischen denen eine Trockenkammer und/oder ein unterdruckfreier Entspannungsbereich angeordnet ist.

Weitere vorteilhafte Ausgestaltungen des Erfindungsgedankens sind Gegenstand von Unteransprüchen.

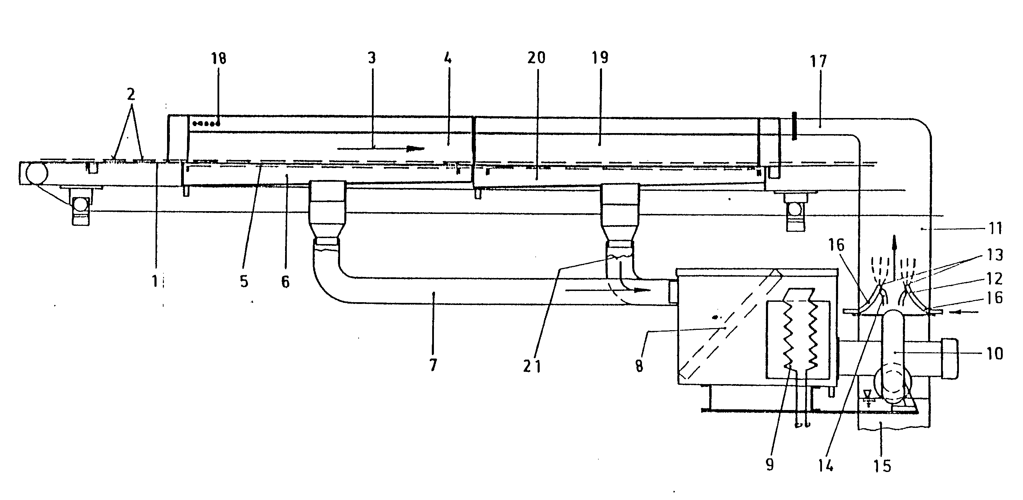

Die Erfindung wird nachfolgend an einem Ausführungsbeispiel näher erläutert, das in der Zeichnung dargestellt ist.

Die Zeichnung zeigt in einem vereinfachten Längsschnitt eine Konditioniereinrichtung für Waffelblätter. Auf einem Bandförderer 1, der aus luftdurchlässigem gewebtem oder gewirktem Material besteht, werden einzelne Waffelblätter 2 kontinuierlich in der durch einen Pfeil 3 angedeuteten Richtung durch eine flache, tunnelartige Feuchtluftkammer 4 transportiert. An der Unterseite der Feuchtluftkammer 4 befindet sich ein Lochboden 5, über den der Bandförderer 1 läuft. Unter dem Lochboden 5 ist eine Unterdruckkammer 6 angeordnet, an die eine Saugleitung 7 angeschlossen ist.

Die Saugleitung 7 führt über einen Filter 8 und eine elektrische Heizeinrichtung 9 zu einem Sauggebläse 10, das die aus der Unterdruckkammer 6 angesaugte, gefilterte und erwärmte Luft in einen Luftschacht 11 bläst. Dem Sauggebläse 10 ist eine Befeuchtungseinrichtung 12 nachgeschaltet. Diese weist Wassersprühdüsen 13 auf, die jeweils über eine Wasserleitung 14 mit einem Wasservorrat 15 unterhalb des Sauggebläses 10 in Verbindung stehen. Druckluftleitungen 16 führen zu den Sprühdüsen 13 und zerstäuben das angesaugte Wasser in den Luftschacht 11 hinein.

Die im Luftschacht 11 transportierte feuchte Luft weist eine relative Luftfeuchtigkeit von etwa 80 % und eine Temperatur von 35 °C auf. Der Luftschacht 11 geht in einen horizontalen Luftkanal 17 über, der in die Feuchtluftkammer 4 führt und dort seitliche Luftaustrittsöffnungen 18 aufweist. Die Luft wird somit im Kreislauf geführt und im Bereich der Feuchtluftkammer 4 durch die einzelnen Waffelblätter 2 hindurch gesaugt, wobei ein Teil der Luftfeuchtigkeit von den Waffelblätern 2 aufgenommen wird. Der Feuchtigkeitsgehalt der Waffelblätter wird dadurch von etwa 1 % auf etwa 4 % angehoben. Die aus der Unterdruckkammer 6 abgesaugte Luft hat Feuchtigkeit verloren ; die Luft reißt von den Waffelblättern 2 herangeführte Staubteilchen mit und hat sich beim Konditionieren der Waffelblätter 2 abgekühlt. Deshalb wird die Luft anschließend im Filter 8 gefiltert und in der Heizeinrichtung 9 aufgeheizt sowie in der Befeuchtungseinrichtung 12 wieder mit Feuchtigkeit angereichert.

Die Länge der Feuchtluftkammer 4 ist so auf die Fördergeschwindigkeit des Bandförderers 1 abgestimmt, daß die einzelnen Waffelblätter 2 etwa 30 sec in der Feuchtluftkammer 4 verweilen und konditioniert werden.

Die Luftdurchlässigkeit des Lochbodens 5 mit dem aufliegenden Bandförderer 1 ist so gewählt, daß sich die Luftdurchlässigkeit, d. h. der Strömmungswiderstand für die hindurchgesaugte Luft, nicht wesentlich ändert, wenn der Bandförderer 1 mit Waffelblättern 2 belegt ist. Deshalb ist es nicht erforderlich, die Waffelblätter 2 ohne Zwischenraum heranzufördern. Auch wenn die Oberfläche des Bandförderers 1 nur teilweise mit Waffelblättern bedeckt ist, bleibt sichergestellt, daß noch eine ausreichende Menge von feuchter Luft durch die Waffelblätter 2 hindurchgesaugt wird.

Um die Luftdurchlässigkeit des Lochbodens 5 zu verändern, kann dieser aus zwei aufeinanderliegenden, relativ zueinander verschiebbaren Lochblechen bestehen.

Beim dargestellten Ausführungsbeispiel ist der Feuchtluftkammer 4 eine zweite Feuchtluftkammer 19 nachgeordnet, unter der ebenfalls eine Unterdruckkammer 20 angeordnet ist, die über ein Saugrohr 21 mit dem Sauggebläse 10 verbunden ist. Es ist beispeilsweise möglich, der zweiten Feuchtluftkammer 19 Luft mit einem geringeren Feuchtigkeitsgehalt zuzuführen oder sogar trockene Luft zuzuführen, um eine noch vollständigere Verteilung der Feuchtigkeit im Waffelblatt zu erreichen. Es ist auch möglich, zwischen den beiden Feuchtluftkammern 4 und 19 einen unterdruckfreien Entspannungsbereich vorzusehen. Beim Durchlaufen dieses Entspannungsbereiches erfolgt eine weitere gleichmäßige Verteilung der Feuchtigkeit im Waffelblatt. Das Waffelblatt kann sich frei entspannen, so daß bei der Ausdehnung infolge der Feuchtigkeitsautnahme auftretende Spannungen vermieden bzw. abgebaut werden.

Wenn es erwünscht ist, die Waffelblätter von beiden Seiten gleichmäßig zu behandeln, kann zwischen den beiden Feuchtluftkammern 4 und 19 eine Wendeeinrichtung vorgesehen werden. Die feuchte Luft wird dann in den beiden Konditionierstationen in entgegengesetzter Richtung durch die Waffelblätter gesaugt.

Abweichend von dem beschriebenen Ausführungsbeispiel kann auch vorgesehen werden, daß mehrere, beispielsweise drei Waffelblätter übereinanderliegend durch die Konditioniereinrichtung geführt werden, da die Saugwirkung ausreicht, innerhalb der zur Verfügung stehenden Zeit die feuchte Luft auch durch mehrere Waffelblätter hindurchzusaugen. Zusammen mit der feuchten Luft können auch weitere Stoffe, beispielsweise Aromastoffe in die Waffelblätter eingebracht werden.

**Patentansprüche**

1. Verfahren zum Konditionieren von Waffelblättern mittels feuchter Luft, dadurch gekennzeichnet, daß die feuchte Luft durch die einzelnen Waffelblätter hindurchgesaugt wird.

2. Verfahren nach Anspruch 1, dadurch gekennzeichnet, daß die Waffelblätter kontinuierlich über eine luftdurchlässige Fläche bewegt werden, unter der ein Unterdruck erzeugt wird, und daß die feuchte Luft an der Oberseite der Waffelblätter zugeführt wird.

3. Vorrichtung zur Durchführung des Verfahrens nach Anspruch 1 oder 2, mit einem die einzelnen Waffenblätter aufnehmenden Förderer, der durch eine mit feuchter Luft beaufschlagte Feuchtluftkammer läuft, dadurch gekennzeichnet, daß der Förderer ein luftdurchlässiger Bandförderer (1) ist, der auf einem Lochboden (5) durch die Feuchtluftkammer (4) läuft, und daß unter dem Lochboden (5) eine mit einem Sauggebläse (10) verbundene Unterdruckkammer (6) angeordnet ist.

4. Vorrichtung nach Anspruch 3, dadurch gekennzeichnet, daß die aus der Unterdruckkammer (6) abgesaugte Luft über eine Heizeinrichtung (9) und Befeuchtungseinrichtung (12) geleitet und im Kreislauf der Feuchtluftkammer (4) zugeführt wird.

5. Vorrichtung nach Anspruch 3, dadurch gekennzeichnet, daß die Luftdurchlässigkeit des Lochbodens (5) mit dem aufliegenden Bandförderer (1) in der Größenordnung der Luftdurchlässigkeit der zu behandelnden Waffelblätter (2) liegt.

6. Vorrichtung nach Anspruch 3, dadurch gekennzeichnet, daß der Bandförderer (1) ein gewebtes oder gewirktes Band ist.

7. Vorrichtung nach Anspruch 3, dadurch gekennzeichnet, daß der Lochboden (5) aus zwei aufeinanderliegenden, zur Veränderung des Durchtrittsquerschnitts relativ zueinander verschiebbaren Lochblechen besteht.

8. Vorrichtung nach Anspruch 3, dadurch gekennzeichnet, daß zwischen der Unterdruckkammer (6) und dem Sauggebläse (10) ein Filter (8) angeordnet ist.

9. Vorrichtung nach Anspruch 3, dadurch gekennzeichnet, daß der Bandförderer (1) durch mehrere voneinander getrennte Feuchtluftkammern (4, 19) geführt wird.

10. Vorrichtung nach Anspruch 3 oder 9, dadurch gekennzeichnet, daß einer ersten Feuchtluftkammer (4) eine Trockenkammer nachgeordnet ist, unter der sich ebenfalls eine Unterdruckkammer befindet.

11. Vorrichtung nach Anspruch 3 oder 9, dadurch gekennzeichnet, daß einer ersten Feuchtluftkammer (4) ein unterdruckfreier Entspannungsbereich nachgeordnet ist.

12. Vorrichtung nach Anspruch 9, dadurch gekennzeichnet, daß zwischen zwei Feuchtluftkammern (4, 19) eine Wendeeinrichtung für die Waffelblätter (2) angeordnet ist.

**Claims**

1. Process for conditioning wafer sheets by means of moist air, characterised by the fact that the moist air is sucked through the individual wafer sheets.

2. Process according to Claim 1, characterised by the fact that the wafer sheets are moved continuously over an air-permeable surface beneath which a partial vacuum is produced, and that the moist air is brought to the top of the wafer sheets.

3. Apparatus for carrying out the process according to Claims 1 or 2, with a conveyor which takes up the individual wafer sheets and runs through a moist air chamber pressurised with moist air, characterised by the fact that the conveyor is an air-permeable belt conveyor (1) which runs on a perforated base (5) through the moist air chamber (4), and that under the perforated base (5) a low-pressure chamber (6) connected to a suction fan (10) is arranged.

4. Apparatus according to Claim 3, characterised by the fact that the air sucked out from the low-pressure chamber (6) is led over a heating device (9) and a moistening device (12) and is fed in the circulation of the moist air chamber (4).

5. Apparatus according to Claim 3, characterised by the fact that the air permeability of the perforated base (5) with the belt conveyor (1) lying on it, is of the order of air permeability of the wafer sheets (2) to be treated.

6. Apparatus according to Claim 3, characterised by the fact that the belt conveyor (1) is a woven or knitted belt.

7. Apparatus according to Claim 3, characterised by the fact that the perforated base (5) consists of two perforated plates lying on each other, which can be shifted in relation to each other for changing the cross-section of passage.

8. Apparatus according to Claim 3, characterised by the fact that between the low-pressure chamber (6) and the suction fan (10) a filter (8) is arranged.

9. Apparatus according to Claim 3, characterised by the fact that the belt conveyor (1) is led through several moist air chambers (4, 19) which are separated from each other.

10. Apparatus according to Claim 3 or Claim 9, characterised by the fact that a drying chamber is arranged after a first moist air chamber (4) beneath which there is a low-pressure chamber.

11. Apparatus according to Claim 3 or Claim 9, characterised by the fact that a relaxation zone, free from a partial vacuum, is arranged after a first moist air chamber (4).

12. Apparatus according to Claim 9, characterised by the fact that between two moist air chambers (4, 19) a turning arrangement for the wafer sheets (2) is arranged.

**Revendications**

1. Procédé pour le conditionnement de feuilles de gaufres à l'aide d'air humide, caractérisé en ce que l'air humide est aspiré à travers les diverses feuilles de gaufres.

2. Procédé selon la revendication 1 caractérisé en ce qu'on fait déplacer les feuilles de gaufres en continu au-dessus d'une surface perméable à l'air en dessous de laquelle on produit une dépression et en ce qu'on alimente l'aire humide à la face supérieure des feuilles de gaufres.

3. Dispositif pour la mise en œuvre du procédé selon la revendication 1 ou 2, comportant un convoyeur chargé de diverses feuilles de gaufres, qui traverse une chambre d'air humide alimentée en air humide, caractérisé en ce que le convoyeur consiste en un convoyeur à bande (1) perméable à l'air qui traverse la chambre d'air humide (4) sur un fond perforé (5) et en ce qu'une chambre sous dépression (6) reliée à une soufflerie d'extraction (10) est agencée en dessous du fond perforé (5).

4. Dispositif selon la revendication 3 caractérisé en ce que l'air aspiré de la chambre sous dépression (6) est mené *via* un dispositif de chauffage (9) et un dispositif d'humidification (12) et est recyclé dans la chambre d'air humide (4).

5. Dispositif selon la revendication 3 caractérisé en ce que la perméabilité à l'air du fond perforé (5) recouvert du convoyeur à bande (1) se situe dans l'ordre de grandeur de la perméabilité à l'air des feuilles de gaufres (2) à traiter.

6. Dispositif selon la revendication 3 caractérisé en ce que le convoyeur à bande (1) consiste en une bande tissée ou tricotée.

7. Dispositif selon la revendication 3 caractérisé en ce que le fond perforé (5) consiste en deux feuilles métalliques ajourées superposées qui peuvent être déplacées l'une par rapport à l'autre en vue de modifier la section de passage.

8. Dispositif selon la revendication 3 caractérisé en ce qu'un filtre (8) est agencé entre la chambre sous dépression (6) et la soufflerie d'extraction (10).

9. Dispositif selon la revendication 3 caractérisé en ce que le convoyeur à bande (1) est mené à travers plusieurs chambres d'air humide (4, 19) séparées l'une de l'autre.

10. Dispositif selon la revendication 3 ou 9 caractérisé en ce qu'en aval d'une première chambre d'air humide (4) est montée une chambre de séchage en dessous de laquelle se trouve également une chambre sous dépression.

11. Dispositif selon la revendication 3 ou 9 caractérisé en ce qu'en aval d'une première chambre d'air humide (4) est montée une zone de détente qui n'est pas sous dépression.

12. Dispositif selon la revendication 9 caractérisé en ce qu'un dispositif de renversement des feuilles de gaufres (2) est agencé entre deux chambres d'air humide (4, 19).